(19) Europäisches Patentamt
European Patent Office
Office européen des brevets

(11) **EP 1 601 128 B1**

(12) **EUROPÄISCHE PATENTSCHRIFT**

(45) Veröffentlichungstag und Bekanntmachung des Hinweises auf die Patenterteilung:
**02.12.2009 Patentblatt 2009/49**

(51) Int Cl.:
***H04L 1/20*** *(2006.01)* ***H04L 27/26*** *(2006.01)*

(21) Anmeldenummer: **05009416.8**

(22) Anmeldetag: **29.04.2005**

(54) **Verfahren und Vorrichtung zur bewegungskompensierten Rauschschätzung bei mobilen drahtlosen Übertragungssystemen**

Method and system for motion-compensated estimation of the noise in mobile wireless transmission systems

Procédé et système d'estimation de bruit avec compensation du mouvement dans des systèmes de transmission mobiles sans fil

(84) Benannte Vertragsstaaten:
**DE FR GB IT NL**

(30) Priorität: **25.05.2004 DE 102004026072**

(43) Veröffentlichungstag der Anmeldung:
**30.11.2005 Patentblatt 2005/48**

(73) Patentinhaber: **Trident Microsystems (Far East) Ltd.**
**Grand Cayman (KY)**

(72) Erfinder:
- **Van Klinken, Arnond Hendrik**
 **6874 BE Wolfheze (NL)**
- **Schur, Romed, Dipl.-Ing.**
 **79111 Freiburg (DE)**

(74) Vertreter: **Epping - Hermann - Fischer**
**Patentanwaltsgesellschaft mbH**
**Ridlerstrasse 55**
**80339 München (DE)**

(56) Entgegenhaltungen:
**WO-A-02/100033**

**Beschreibung**

Die Erfindung betrifft ein Verfahren sowie eine Vorrichtung zur bewegungskompensierten Rauschschätzung bei mobilen drahtlosen Übertragungssystemen, bei welchen von einem Sender Referenzsymbole ausgesandt werden.

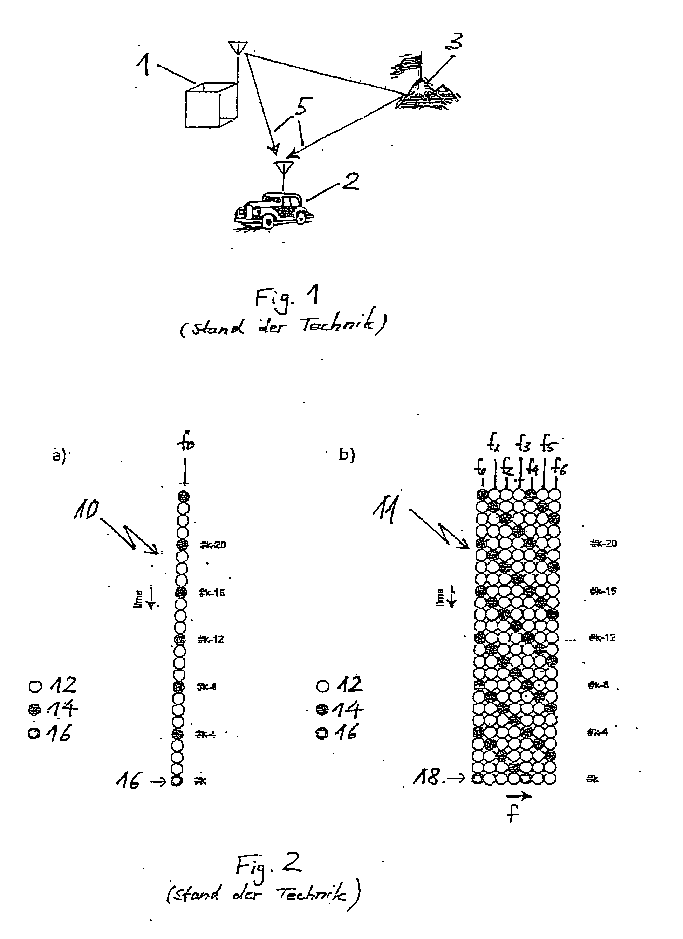

Drahtlose Übertragungssysteme weisen, wie in Figur 1 schematisch dargestellt, in der Regel wenigstens einen Sender 1 sowie einen Empfänger 2 auf. Bei mobilen Übertragungssystemen ist zudem der Sender 1 bzw. der Empfänger 2 mobil, was in der Darstellung durch den beweglichen Empfänger 2 zum Ausdruck kommt. Vom Sender 1 wird ein Datensignal ausgesandt, welches über einen Übertragungskanal, der auch als Funkkanal bezeichnet wird, zum Empfänger 2 gelangt. Die Übertragungseigenschaften dieses Übertragungskanals sind durch die jeweils vorhandene Übertragungssituation vorgegeben. Unter anderem wird die Übertragungssituation maßgebend beeinträchtigt durch die Entfernung zwischen Sender 1 und Empfänger 2, Reflexionen von Daten- bzw. Funksignalen an Gebäuden, Bergen, Fahrzeugen oder anderen Hindernissen 3 sowie durch die auf dem Dopplereffekt beruhende Frequenzverschiebung bei nicht verschwindender relativer Geschwindigkeit zwischen Sender 1 und Empfänger 2.

Durch den Einfluss der Übertragungseigenschaften des Übertragungskanals auf das Datensignal wird dieses verzerrt, sodass das im Empfänger 2 empfangene Signal im Allgemeinen nicht mit dem gesendeten Datensignal übereinstimmt. Daher ist es erforderlich, das Datensignal im Empfänger zu rekonstruieren, was eine Anpassung des Empfängers an den Übertragungskanal bzw. dessen Übertragungseigenschaften erfordert, um eine bestmögliche Rekonstruktion zu erzielen.

Zu den wesentlichen Übertragungseigenschaften des Übertragungskanals ist zunächst dessen Übertragungsfunktion zu rechnen. Das Frequenzsspektrum des im Empfänger empfangenen Signals berechnet sich aus dem Frequenzspektrum des gesendeten Datensignal durch Multiplikation mit dieser Übertragungsfunktion. Die Übertragungsfunktion stellt demnach eine Verknüpfung zwischen dem gesendeten Datensignal und dem empfangenen Signal dar. So ist beispielsweise bei der kohärenten Demodulation von Orthogonal Frequency Division Multiplexing (OFDM) - Signalen die Schätzung der Übertragungsfunktion eine zentrale Aufgabe.

Die empfängerseitige Rekonstruktion des Datensignals wird jedoch beeinträchtigt durch Rausch- und Störanteile, welche dem im Empfänger empfangenen Signal überlagert sind. Das Rauschen wird dabei hauptsächlich durch thermische Bewegungen von Elementarteilchen verursacht. Die Ursachen für Störungen sind vielfältiger Natur und können beispielsweise durch gleichzeitigen Empfang eines fremden Senders verursacht werden. Im Folgenden wird nur von Rauschen die Rede sein, wobei hierunter stets auch die erwähnten Störungen zu verstehen sind.

Weiterhin verursacht eine Relativbewegung zwischen Sender und Empfänger eine auch als zeitliche Varianz oder Zeitvarianz bezeichnete zeitliche Änderung des Übertragungskanals bzw. der Übertragungseigenschaften. Diese beeinträchtigt ebenfalls die empfangsseitige Rekonstruktion des Datensignals.

Die Gewährleistung einer möglichst hohen Qualität des empfangsseitig rekonstruierten Datensignals erfordert daher eine Analyse des empfangenen Datensignals hinsichtlich der Störeffekte Rauschen und Zeitvarianz des Übertragungskanals und eine entsprechende Anpassung des Empfängers an die jeweils vorliegenden Übertragungseigenschaften.

Aus diesem Grund werden Verfahren zur Schätzung der Relativgeschwindigkeit zwischen einem Sender und einem Empfänger, wie sie beispielsweise aus der DE 199 23 690 A1 oder der US 6,636,574 B2 bekannt sind, eingesetzt. Auch sind Verfahren zur Schätzung des Rauschpegels bei Übertragungssystemen bekannt z.B. aus WO 02/100033, bei welchen in das Datensignal Referenzsymbole eingefügt sind. Hier wird anhand der Abweichung des empfangenen Referenzsymbols von dem ursprünglich gesendeten Referenzsymbol der im empfangenen Datensignal enthaltene Rauschpegel geschätzt.

Die auf diese Art geschätzten Rauschanteile im empfangenen Datensignal enthalten jedoch gleichzeitig Störanteile, die aus der zeitlichen Änderung des Übertragungskanals bzw. dessen Übertragungseigenschaften herrühren. Bei der Rekonstruktion des ursprünglich gesendeten Datensignals anhand der Ergebnisse der Rauschschätzung führen diese Anteile der Zeitvarianz des Übertragungskanals zu einer Verzerrung des eigentlichen Ergebnisses. Darüber hinaus behindern die im empfangenen Datensignal enthaltenen Rauschanteile eine genaue Bestimmung der Zeitvarianz des Übertragungskanals. Wird hierüber eine Relativgeschwindigkeit zwischen Sender und Empfänger geschätzt, so ist das Ergebnis dieser Schätzung Fehlern auf Grund des Rauschens unterworfen.

Der Erfindung liegt somit das Problem zu Grunde, ein Verfahren zur Verfügung zu stellen, mit welchem eine bewegungskompensierte Rauschschätzung bei mobilen drahtlosen Übertragungssystemen, bei welchen von einem Sender Referenzsymbole ausgesandt werden, möglich ist.

Dieses Problem wird erfindungsgemäß gelöst durch ein Verfahren mit den Merkmalen des Anspruchs 1.

Weiterhin liegt der Erfindung das Problem zu Grunde, eine Vorrichtung zur Verfügung zu stellen, mit welcher eine bewegungskompensierte Rauschschätzung bei mobilen drahtlosen Übertragungssystemen, bei welchen von einem Sender Referenzsymbole ausgesandt werden, möglich ist.

Dieses Problem wird erfindungsgemäß gelöst durch eine Vorrichtung mit den Merkmalen des Anspruchs 12.

Vorteilhafte Weiterbildungen der Erfindung sind jeweils Bestandteil abhängiger Unteransprüche.

Die der Erfindung zu Grunde liegende Idee besteht darin, aus wenigstens einem Teil zeitlich mittel- oder unmittelbar aufeinander folgend in einem Empfänger empfangener Referenzsymbole durch Bildung eines statistischen Moments, welches beispielsweise eine arithmetischer Mittelwert ist, einen statischen Anteil der empfangenen Referenzsymbole zu ermitteln, weiterhin durch Vergleich mindestens zweier mittel- oder unmittelbarer zeitlich aufeinander folgender Referenzsymbole einen dynamischen Anteil der empfangenen Referenzsymbole zu ermitteln, aus dem statischen und dem dynamischen Anteil der Referenzsymbole eine Vorhersagewert für das nächste empfangene Referenzsymbol zu berechnen, nach Empfang dieses nächsten Referenzsymbols durch Vergleich des empfangenen Referenzsymbols mit dem Vorhersagewert einen Vorhersagefehler zu bestimmen, und aus dem Vorhersagefehler einen Schätzwert für das Rauschen eines in einem Übertragungskanal übertragenen Datensignals zu ermitteln. Zudem wird die Berechnung des Vorhersagewerts unter Berücksichtigung des Vorhersagefehlers an zeitliche Veränderungen des Übertragungskanals angepasst.

Auf diese Weise ergibt sich eine bewegungskompensierte Rauschschätzung, bei welcher das Ergebnis der Schätzung nicht durch eine auf der Relativbewegung zwischen Sender und Empfänger beruhenden Zeitvarianz des Übertragungskanals beeinträchtigt ist. Infolgedessen kann eine genauere Rekonstruktion des ursprünglichen Datensignals durchgeführt werden, sodass die Qualität des empfangsseitig rekonstruierten Datensignals höher ausfällt.

Im Folgenden wird die Erfindung anhand von Figuren näher erläutert.

Es zeigen:

Figur 1      bereits behandelte schematische Darstellung eines mobilen drahtlosen Übertragungssystems nach dem Stand der Technik.

Figur 2      Beispiele für Datensignale mit eingefügten Referenzsymbolen nach dem Stand der Technik, wobei in (a) das Datensignal eine Trägerfrequenz aufweist, in (b) ein OFDM-Datensignal dargestellt ist.

Figur 3      Schematische Darstellung einer erfindungsgemäßen Vorrichtung zur bewegungskompensierten Rauschschätzung.

Figur 1 zeigt den prinzipiellen Aufbau eines mobilen drahtlosen Übertragungssystems, wie es bereits oben beschrieben wurde. Ein vom Sender 1 ausgesandtes Datensignal gelangt über verschiedene, den Übertragungskanal 5 bildende Wege zum Empfänger 2, wobei es teilweise an Hindernissen 3 reflektiert wird.

Figur 2a zeigt ein Datensignal 10 mit einer einzelnen Trägerfrequenz $f_0$, in welches in zeitlich gleichen Abständen zwischen Informationssymbolen 12 Referenzsymbole 14, 16 eingefügt sind. Wie durch den Laufindex k angedeutet ist, folgt auf drei Informationssymbole 12 jeweils ein Referenzsymbol 14, 16. Das aktuell empfangene neue Referenzsymbol 16 trägt den Laufindex k, sodass Referenzsymbole mit eiem Indexwert kleiner als k bereits in einem Empfänger empfangen wurden und dort gegebenenfalls abgespeichert sind.

Figur 2b zeigt ein OFDM-Datensignal mit Mehrträgerübertragung. Hier wird eine Vielzahl von Trägerfrequenzen $f_0$, $f_1$, $f_2$, $f_3$, $f_4$, $f_5$, $f_6$ mit festem Frequenzabstand eingesetzt, die jeweils Datensignale tragen. Auf jeder dieser sich entlang der Frequenzachse f erstreckenden Trägerfrequenzen $f_0$, $f_1$, $f_2$, $f_3$, $f_4$, $f_5$, $f_6$ werden zwischen Informationssymbolen 12 Referenzsymbole 14, 16 übertragen. Aktuell empfangene Referenzsymbole 16 bilden zusammen mit den ebenfalls zu diesem mit dem Laufindex k bezeichneten Zeitpunkt empfangenen Informationssymbolen ein aktuell neu empfangenes OFDM-Symbol 18. Solche OFDM-Datensignale werden beispielsweise in digitalen Audioübertragungssystemen (Digital Audio Broadcasting - DAB) oder digitalen Bildübertragungssystemen, wie beispielsweise Digital Video Broadcasting Terrestrial (DVB-T) eingesetzt.

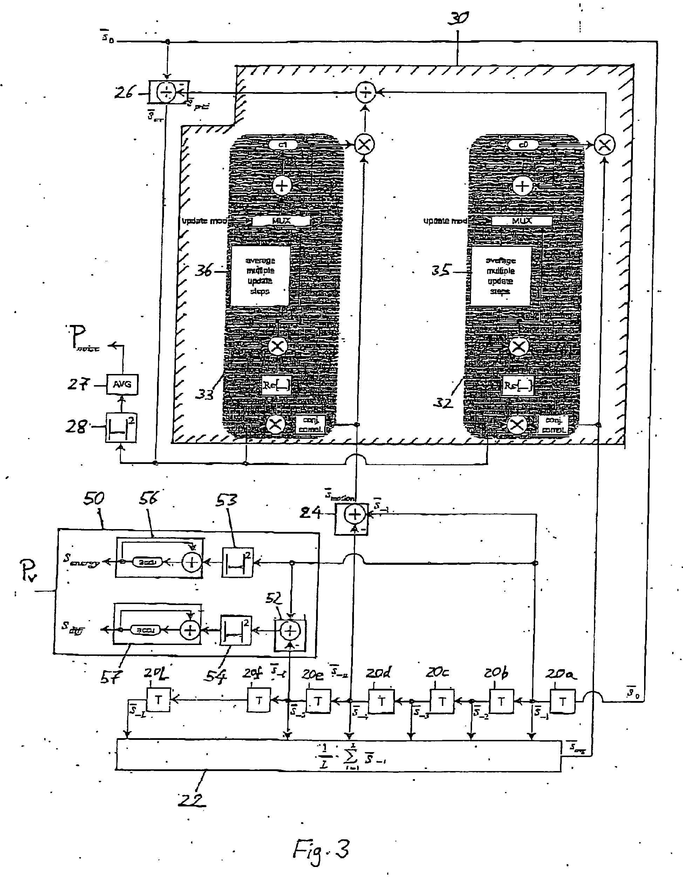

Figur 3 zeigt eine schematische Darstellung eines Ausführungsbeispiels einer erfindungsgemäßen Vorrichtung zur bewegungskompensierten Rauschschätzung bei mobilen drahtlosen Übertragungssystemen, bei welchen von einem Sender 1 Referenzsymbole 14, 16 ähnlich wie in Figur 2a dargestellt ausgesandt werden. Das Verfahren kann jedoch auch auf Mehrträgerfrequenzsignale wie das OFDM-Signal aus Figur 2b angewandt werden, indem das Verfahren auf jede Trägerfrequenz angewandt wird, oder auch auf nur eine Trägerfrequenz und eine Übernahme des Ergebnisses der Rauschschätzung auf die übrigen Trägerfrequenzen, gegebenenfalls unter Berücksichtigung der verschiedenen Werte der Trägerfrequenzen, erfolgt. Entsprechendes gilt für das erfindungsgemäße Verfahren zur bewegungskompensierten Rauschschätzung.

Im Folgenden wird zunächst näher auf ein Ausführungsbeispiel eines erfindungsgemäßen Verfahrens zur bewegungskompensierten Rauschschätzung eingegangen.

Hierbei wird in Teilen auf das in Figur 3 schematisch dargestellte Ausführungsbeispiel einer erfindungsgemäßen Vorrichtung Bezug genommen, da der Sachverhalt hierdurch besser verständlich wird.

Zu Beginn eines Verfahrenszyklus wird aus wenigstens einem Teil zeitlich mittel- oder unmittelbar aufeinander folgend in einem Empfänger 2 empfangener Referenzsymbole $\overline{S}_{-1}$, $\overline{S}_{-2}$, ..., $\overline{S}_{-L}$ durch Bildung eines statistischen Moments ein statischer Anteil $\overline{S}_{avg}$ der empfangenen Referenzsymbole $\overline{S}_{-1}$, $\overline{S}_{-2}$, ..., $\overline{S}_{-L}$ ermittelt. Der Oberstrich in der Notation verdeutlicht, dass es sich hierbei um komplexe Größen handelt.

Im vorliegenden Ausführungsbeispiel wird als statistisches Moment der arithmetische Mittelwert der zuletzt zeitlich aufeinander folgend im Abstand T empfangenen Referenzsymbole $\overline{S}_{-1}, \overline{S}_{-2}, ..., \overline{S}_{-L}$ bestimmt. Im Weiteren erfolgt die Bestimmung eines dynamischen Anteils $\overline{S}_{motion}$ der empfangenen Referenzsymbole $\overline{S}_{-1}, \overline{S}_{-2}, ..., \overline{S}_{-L}$ durch Vergleich der zeitlich aufeinander folgenden Referenzsymbole $\overline{S}_{-\mu}$ und $\overline{S}_{-1}$, wobei $L \geq \mu > 1$ gilt, $\mu$ ganzzahlig ist und in Figur 3 als $\overline{S}_{-\mu}$, $\overline{S}_{-4}$ gewählt wurde. Der Vergleich erfolgt dabei bevorzugt durch Subtraktion bzw.

Differenzbildung. Daneben kann auch eine größere Anzahl zeitlich mittel- oder unmittelbar aufeinander folgender Referenzsymbole für die Ermittlung des dynamischen Anteils des $\overline{S}_{motion}$ herangezogen werden.

Im Weiteren erfolgt die Bildung eines Vorhersagewertes $\overline{S}_{pred}$ für das nächste empfangene Referenzsymbol $\overline{S}_0$ aus dem statischen $\overline{S}_{avg}$ und dem dynamischen Anteil $\overline{S}_{motion}$ der Referenzsymbole $\overline{S}_{-1}, \overline{S}_{-2}, ..., \overline{S}_{-L}$. Dieser Vorhersagewert $\overline{S}_{pred}$ wird bevorzugt aus einer Linearkombination aus dem statischen $\overline{S}_{avg}$ und dem dynamischen Anteil $\overline{S}_{motion}$ der Referenzsymbole $\overline{S}_{-1}, \overline{S}_{-2}, ..., \overline{S}_{-L}$ gebildet, sodass sich dieser wie folgt berechnet:

$$\overline{s}_{pred} = c0 \bullet \overline{s}_{avg} + c1 \bullet \overline{s}_{motion}$$

Der bestimmte Vorhersagewert $\overline{S}_{pred}$ wird mit dem tatsächlich als nächstes empfangenen Referenzsymbol $\overline{S}_0$ verglichen, was bevorzugt durch Subtraktion des Vorhersagewerts $\overline{S}_{pred}$ vom empfangenen Referenzsymbol $\overline{S}_0$ geschieht. Im Ergebnis ergibt sich hierbei ein Vorhersagefehler $\overline{S}_{err}$ als Differenz zwischen Vorhersagewert $\overline{S}_{pred}$ und empfangenem Referenzsymbol $\overline{S}_0$.

Anhand des Vorhersagefehlers $\overline{S}_{err}$ wird im Folgenden ein Schätzwert für das Rauschen $P_{noise}$ eines in einem Übertragungskanal 5 übertragenen Datensignals 10 ermittelt. Vorzugsweise geschieht dies, wie in Figur 3 dargestellt, durch Bildung des Betragsquadrates von $\overline{S}_{err}$ und die Mittelung des resultierenden Ergebnisses mit den Betragsquadraten von in vorausgegangenen Verfahrenszyklen ermittelten Vorhersagefehlern.

Auf diese Weise ergibt sich im eingeschwungenen Zustand ein bewegungskompensierter Schätzwert für das Rauschen $P_{noise}$.

Da der Übertragungskanal eine zeitliche Varianz aufweisen kann, ist es nicht möglich, den Vorhersagewert $\overline{S}_{pred}$ stets auf dieselbe Weise aus dem statischen Anteil $\overline{S}_{avg}$ und dem dynamischen Anteil $\overline{S}_{motion}$ zu bilden. Daher wird die Art und Weise der Bildung des Vorhersagewerts $\overline{S}_{pred}$ unter Berücksichtigung des Vorhersagefehlers $\overline{S}_{err}$ an zeitliche Veränderungen des Übertragungskanals 5 angepasst. Im vorliegenden Ausführungsbeispiel, in welchem der Vorhersagewert $\overline{S}_{pred}$ durch Bildung der oben angeführten Linearkombinationen gebildet wird, erfolgt diese Anpassung durch Anpassung der Parameter c0 und c1. Hierbei kann eine Vielzahl von an sich bekannten Adaptions-Algorithmen zum Einsatz kommen. In diesem Ausführungsbeispiel erfolgt die Anpassung der Berechnung des Vorhersagewerts $\overline{S}_{pred}$ an zeitliche Veränderungen des Übertragungskanals 5 bevorzugt unter Verwendung der Methode der kleinsten Fehlerquadrate.

Die Anpassung der Berechnung des Vorhersagewerts $\overline{S}_{pred}$ kann jeweils nach der Ermittlung eines weiteren Vorhersagefehlers $\overline{S}_{err}$ angepasst werden. Alternativ kann die Anpassung stets nach bestimmten Zeitintervallen erfolgen, wobei jeweils wenigstens ein Teil der im jeweiligen Zeitintervall ermittelten Vorhersagefehler $\overline{S}_{err}$ bei der Anpassung berücksichtigt wird. Bevorzugt erfolgt in diesem Fall die Anpassung der Bildung des Vorhersagewerts $\overline{S}_{pred}$ durch Mittelung der jeweils aus der Berücksichtigung der einzelnen Vorhersagefehler $\overline{S}_{err}$ resultierenden Anpassungen. Auf diese Weise wird eine Überempfindlichkeit des Verfahrens gegenüber kurzzeitigen Störungen des Datensignals bzw. des Übertragungskanals vermieden.

Im in Figur 3 dargestellten Ausführungsbeispiel wird für die Identifikation der Referenzsymbole $\overline{S}_{-1}, \overline{S}_{-2}, ... , \overline{S}_{-L}, \overline{S}_0$ ein im Empfänger 2 bekannter zeitlicher Abstand T herangezogen, in welchem die Referenzsymbole $\overline{S}_{-1}, \overline{S}_{-2}, \overline{S}_{-L}, \overline{S}_0$ ausgesandt werden. Alternativ oder ergänzend hierzu kann auch eine im Empfänger 2 bekannte Gestalt der Referenzsymbole $\overline{S}_{-1}, \overline{S}_{-2}, ..., \overline{S}_{-L}, \overline{S}_0$ für die Identifikation derselbigen eingesetzt werden.

In einer vorteilhaften Weiterbildung der Erfindung wird der Wert mindestens eines bei der Berechnung des Vorhersagewertes $\overline{S}_{pred}$ eingesetzten Parameters als Indikator für die zeitliche Varianz des Übertragungskanals 5 verwendet. Im vorliegenden Ausführungsbeispiel, bei welchem der Vorhersagewert $\overline{S}_{pred}$ gemäß der oben angeführten Linearkombination mit den Parametern c0 und c1 gebildet wird, kommt dem Parameter c1 diese Indikatorfunktion zu. Während c0 im eingeschwungenen Zustand des Verfahrens stets Werte von ungefähr 1 aufweist, beträgt c1 bei einem zeitlich invarianten Übertragungskanal etwa 0 und bestimmt sich bei einem zeitvarianten Übertragungskanal gemäß der folgenden Relation:$\overline{S}$

Ein Wert für c1 > ½ kann somit als Hinweis für einen zeitlich varianten Übertragungskanal und somit auf eine Relativgeschwindigkeit zwischen Sender 1 und Empfänger 2 ungleich Null angesehen werden.

Die Werte der Parameter c0 und c1 im Falle eines statischen sowie eines zeitvarianten Übertragungskanals sind in der folgenden Tabelle nochmals übersichtlich dargestellt.

| Statischer Übertragungskanal | $c0 \approx 1$ | $c1 \approx 0$ |
|---|---|---|
| Zeitvarianter Übertragungskanal | $c0 \approx 1$ | $c1 \approx \dfrac{\dfrac{L-1}{2}+1}{\mu-1} > \dfrac{1}{2}$ |

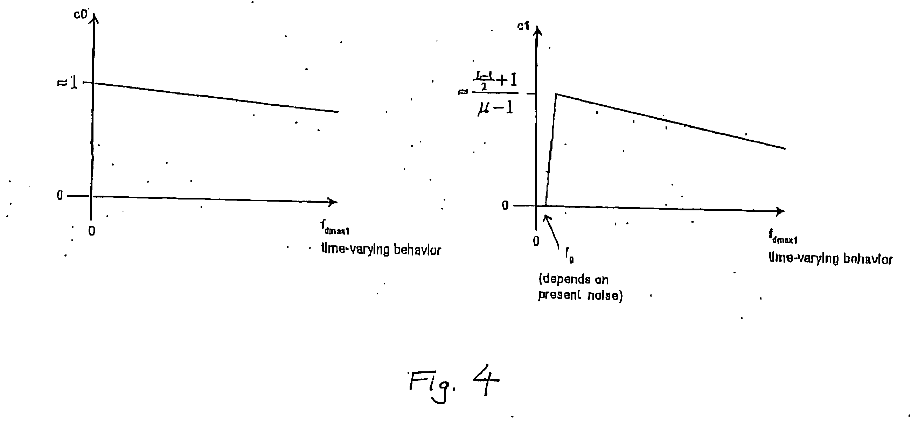

Zudem ist in Figur 4 die Abhängigkeit der Parameter c1 und c0 von der Zeitvarianz grafisch dargestellt. Während c0 bei Zeitinvarianz etwa 1 beträgt und mit zunehmender Zeitvarianz des Übertragungskanals leicht abfällt, weist c1 bei zeitinvariantem Übertragungskanal den Wert 0 auf, welcher mit zunehmender Zeitvarianz ab einem Grenzbereich fg , welcher vom vorliegenden Rauschen abhängt, sehr stark ansteigt und einen Maximalwert erreicht, von welchem aus c1 mit zunehmender Zeitvarianz wiederum langsam abnimmt.

In einer Weiterbildung der Erfindung wird neben einer bewegungskompensierten Rauschschätzung eine Schätzung der Relativgeschwindigkeit zwischen Sender 1 und Empfänger 2 durchgeführt. Hierzu erfolgt zunächst die Summation des Betragsquadrats der Differenz von K zeitlich jeweils gleich beabstandeten Referenzsymbolen $\overline{S}_{-1}$ und $\overline{S}_{-\xi}$, wobei K idealerweise Werte größer 100 annimmt. Nach Normierung des Resultates ergibt sich ein Maß Q für die zeitliche Änderung des Übertragungskanals 5, welchem eine Relativgeschwindigkeit zwischen dem Empfänger 2 und dem Sender 1 zugeordnet wird. Auf diese Weise ergibt sich ein Schätzwert $P_v$ für diese Relativgeschwindigkeit. Im vorliegenden Ausführungsbeispiel wird das Maß Q über die folgende Relation bestimmt:

$$Q = \frac{\sum_{h=1}^{K} \left| \overline{S}_{-1h} - \overline{S}_{-\xi h} \right|^2}{\sum_{h=1}^{K} \left| \overline{S}_{-1h} \right|^2} = \frac{S_{diff}}{S_{energy}}$$

Die für die Normierung verwendete Summe über K Betragsquadrate des Referenzsymbols $\overline{S}_{-1}$ stellt ein Maß für die Energie dar und ist daher kurz als Energiemaß $S_{energy}$ bezeichnet. Der Zähler $S_{diff}$ hingegen liefert ein Geschwindigkeitsmaß. Wie bereits angedeutet, kann anstatt der Normierung mittels des Energiemaßes $S_{energy}$ auch eine anderweitige Normierung erfolgen, beispielsweise durch Verwendung von $\overline{S}_{avg}$ statt $\overline{S}_{-1}$ im Nenner.

In der Darstellung von Figur 3 hat $\xi$ willkürlich den Wert 5. Prinzipiell können auch andere Werte angenommen werden, wobei allerdings zu beachten ist, dass $L \geq \xi > 1$ gilt.

Für die Skalierung der Geschwindigkeit über den Quotienten Q existiert eine theoretische Grenze, welche wesentlich durch den Wert $\xi$ bestimmt wird. Charakterisiert wird $\xi$ durch die maximale Dopplerfrequenz $f_{dmax2}$, die im empfangenen Datensignal erhalten sein darf. Für sie gilt:

$$f_{dmax2} \leq \frac{1}{2(\xi-1)T}$$

Auch existiert für die Bestimmung der Zeitvarianz des Übertragungskanals mittels eines als Indikator fungierenden Parameters c1 eine theoretische Grenze, welche durch den Wert von $\mu$ wesentlich beeinflusst wird und charakterisiert wird durch eine weitere maximale Dopplerfrequenz $f_{dmax1}$, die im empfangenen Datensignal enthalten sein darf. Für sie gilt:

$$f_{dmax1} \leq \frac{1}{2(\mu-1)T}$$

In beiden Relationen bezeichnet T den zeitlichen Abstand unmittelbar aufeinander folgender Referenzsymbole.

Soll das Vorliegen eines zeitlich varianten Übertragungskanals sowie eine Geschwindigkeitsschätzung durchgeführt werden, so ist demnach sicherzustellen, dass die maximale im empfangenen Datensignal enthaltene Dopplerfrequenz kleiner ist als der kleinere der beiden Werte $f_{dmax1}$ und $f_{dmax2}$.

Eine bevorzugte Ausgestaltung des erfindungsgemäßen Verfahrens sieht zudem vor, dass das Maß Q für die Relativgeschwindigkeit zwischen Sender 1 und Empfänger 2 nur bestimmt wird, wenn anhand wenigstens eines bei der Bildung des Vorhersagewerts $\overline{S}_{pred}$ verwendeten Parameters, im vorliegenden Ausführungsbeispiel anhand des Parameters c1, eine zeitliche Varianz des Übertragungskanals festgestellt wird. Auf diese Weise können unnötige Relativgeschwindigkeitsschätzungen vermieden werden.

In einer vorteilhaften Weiterbildung der Erfindung wird überdies mit Hilfe des bewegungskompensierten Schätzwertes für das Rauschen $P_{noise}$ eine Korrektur des durch Rauschen beeinträchtigten Schätzwerts $P_v$ für die Relativgeschwindigkeit zwischen Empfänger 2 und Sender 1 vorgenommen.

Figur 3 ist eine schematische Darstellung eines Ausführungsbeispiels einer erfindungsgemäßen Vorrichtung zur bewegungskompensierten Rauschschätzung zu entnehmen. Diese weist Speichereinrichtungen 20a, 20b, ... , 20L für aus einem Empfänger 2 zuführbare, zeitlich mittel- oder unmittelbar aufeinanderfolgend vom Sender 1 ausgesandte Referenzsymbole $\overline{S}_1, \overline{S}_{-2}, ... , \overline{S}_{-L}$ auf. Diese Speichervorrichtungen sind vorteilhafterweise als First-In-First-Out-Speicher (FIFO) ausgeführt, so dass stets die letzten L Referenzsymbole in den Speichervorrichtungen zur Verfügung stehen.

Weiterhin ist als Mittel zur Berechnung eines statischen Anteils $\overline{S}_{avg}$ der empfangenen Referenzsymbole $\overline{S}_{-1}$, $\overline{S}_{-2}$, $\overline{S}_{-L}$, durch Bildung eines statistischen Moments aus wenigstens einem Teil der in den Speichervorrichtungen 20a, 20b, ..., 20L gespeicherten Referenzsymbole $\overline{S}_{-1}$, $\overline{S}_{-2}$, ..., $\overline{S}_{-L}$, eine entsprechende Einrichtung 22 vorgesehen. Hierin erfolgt in der Ausgestaltungsvariante der Figur 3 die Berechnung des statistischen Moments durch Bildung des arithmetischen Mittelwerts aller in den Speichervorrichtungen 20a, 20b, ..., 20L gespeicherten Referenzsymbole $\overline{S}_{-1}$, $\overline{S}_{-2}$, ..., $\overline{S}_{-L}$. Als Mittel zur Ermittlung eines dynamischen Anteils $\overline{S}_{motion}$ der empfangenen Referenzsymbole $\overline{S}_{-1}$, $\overline{S}_{-}2$,..., $\overline{S}_{-L}$ aus der Differenz von wenigstens zwei in den Speichervorrichtungen 20a, 20b, ..., 20L gespeicherten Referenzsymbole $\overline{S}_{-1}$, $\overline{S}_{-\mu}$ ist ein Subtrahierer 24 vorgesehen. Diesem sind das in der Speichervorrichtung 20a abgelegte Referenzsymbol $\overline{S}_{-1}$ sowie das Referenzsymbol $\overline{S}_{-\mu}$ zuführbar, wobei in der in Figur 3 dargestellten Ausgestaltungsvariante für $\mu$ der Wert 4 gewählt wurde so dass als $\overline{S}_{-\mu}$ das in der Speichervorrichtung 20d abgelegte Referenzsymbol $\overline{S}_{-4}$ dem Subtrahierer 24 zuführbar ist.

Des Weiteren ist eine Vorhersageeinrichtung 30 zur Ermittlung eines Vorhersagewertes $\overline{S}_{pred}$ für das nächste vom Empfänger zugeführte Referenzsymbol $\overline{S}_0$ mit Hilfe des statischen Anteils $\overline{S}_{avg}$ und des dynamischen Anteils $\overline{S}_{motion}$ der Referenzsymbole $\overline{S}_{-1}$, $\overline{S}_{-}2$,... $\overline{S}_{-L}$ vorgesehen. Der ermittelte statische Anteil $\overline{S}_{avg}$ sowie der im Subtrahierer gebildete dynamische Anteil $\overline{S}_{motion}$ sind dieser Vorhersageeinrichtung zuführbar. Der Vorhersagewert $\overline{S}_{pred}$ sowie das nächste vom Empfänger zugeführte Referenzsymbol $\overline{S}_0$ sind jeweils einem Subtrahierer 26 zuführbar. Dieser Subtrahierer 26 dient als Mittel zur Bestimmung eines Vorhersagefehlers $\overline{S}_{err}$ aus der Differenz zwischen dem vorhergesagten Referenzsymbol $\overline{S}_{pred}$ und dem nächsten vom Empfänger zugeführten Referenzsymbol $\overline{S}_0$.

Darüber hinaus sind als Mittel zur Berechnung eines Schätzwerts $P_{noise}$ für das Rauschen eines in einem Übertragungskanal 5 übertragenen Datensignals aus dem Vorhersagefehler $\overline{S}_{err}$ eine Einheit zur Bildung von Betragsquadraten 28 sowie eine Mittelungseinheit 27 vorgesehen. Der Vorhersagefehler $\overline{S}_{err}$ ist der Einheit zur Bildung von Betragsquadraten 28 zuführbar, der hierin ermittelte Wert kann weiterhin der Mittelungseinheit 27 zugeführt werden. Von der Mittelungseinheit 27 ist ein Schätzwert für das Rauschen $P_{noise}$ ausgebbar.

Überdies sind Mittel zur Anpassung der Vorhersageeinrichtung 30 anhand des Vorhersagefehlers $\overline{S}_{err}$ an zeitliche Veränderungen des Übertragungskanals 5 vorgesehen. Im vorliegenden Ausführungsbeispiel erfolgt die Ermittlung eines Vorhersagewerts $\overline{S}_{pred}$ durch Bildung einer Linearkombination aus dem statischen Anteil $\overline{S}_{avg}$ und dem dynamischen Anteil $\overline{S}_{motion}$ unter Verwendung der Parameter c0 und c1. Als Mittel zur Anpassung der Vorhersageeinrichtung 30 sind daher in Figur 3 eine Einheit zur Anpassung von c0 32 sowie eine Einheit zur Anpassung von c1 33 angeordnet. Bei anderweitiger Bildung des Vorhersagewertes $\overline{S}_{pred}$ sind dementsprechend andere Mittel zur Anpassung der Vorhersageeinrichtung 30 vorzusehen.

In der in Figur 3 dargestellten Ausgestaltungsvariante sind in der Einheit zur Anpassung von c0 Mittel zur komplexen Konjugation des statischen Moments $\overline{S}_{avg}$ und der Multiplikation des Resultats mit dem Vorhersagefehler vorgesehen, sowie Mittel zur Bildung des Realteils des sich hierbei ergebenen Produktes. Ferner ist ein Mittel zur Multiplikation des Realteils mit einem Skalierungsfaktor zur Schrittweitenregulierung $sz_0$ vorgesehen, woraus ein Anpassungsschritt für c0 resultiert. Mittels eines vorgesehenen Multiplexers MUX ist entscheidbar, ob c0 diesem Anpassungsschritt unterworfen wird, oder unter Verwendung einer Einheit zur Mittelung von Anpassungsschritten 35 erst eine Mittelung mehrerer Anpassungsschritte durchführt und c0 anhand des Ergebnisses angepasst wird. Die Einheit zur Anpassung von c1 ist analog aufgebaut, anstatt des Mittels zur Multiplikation des Realteils mit dem Skalierungsfaktor $sz_0$ ist jedoch ein Mittel zur Multiplikation des Realteils mit dem Skalierungsfaktor zur Schrittweitenregelung $sz_1$ vorgesehen und anstelle von c0 ist c1 den resultierenden Anpassungsschritten unterziehbar bzw. der Anpassung auf Basis des von der Einheit zur Mittelung von c1 Anpassungsschritten bestimmten Anpassungswertes.

Die genannten Einheiten zur Mittelung von Anpassungsschritten 35 und 36 stellen eine Weiterbildung der erfindungsgemäßen Vorrichtung dar, da mit ihrer Hilfe eine zu große Empfindlichkeit der Vorrichtung zur bewegungskompensierten Rauschschätzung gegenüber kurzzeitigen Störungen vermeidbar ist.

Eine andere Weiterbildung der Erfindung sieht Mittel vor, mit denen anhand von in den Speichervorrichtungen 20a, 20b, ..., 20L gespeicherten Referenzsymbolen eine Relativgeschwindigkeit $P_v$ zwischen Sender 1 und Empfänger 2 schätzbar ist. Im vorliegenden Ausführungsbeispiel stellt die Relativgeschwindigkeit-Schätzeinheit 50 ein solches Mittel dar. Mit ihrer Hilfe kann zusätzlich zur bewegungskompensierten Rauschschätzung eine Schätzung der Relativ-geschwindigkeit $P_v$ zwischen Sender 1 und Empfänger 2 erfolgen. In der Ausgestaltungsvariante von Figur 3 weist die Relativgeschwindigkeit-Schätzeinheit 50 einen Subtrahierer 52 auf, welchem das Referenzsymbol $\overline{S}_{-1}$, sowie das Referenzsymbol $\overline{S}_{-\xi}$, wobei $\xi$ hier als 5 gewählt ist, aus den entsprechenden Speichervorrichtungen 20a und 20e zuführbar sind. Die vom Subtrahierer 52 ermittelte Differenz ist der Einheit zur Bildung von Betragsquadraten 54 zuführbar, das Referenzsymbol $\overline{S}_{-1}$ ist überdies der Einheit zur Bildung von Betragsquadraten 53 zuführbar. Die Ausgangssignale der Einheiten zur Bildung von Betragsquadraten 53 und 54 sind jeweils Summierern 56 bzw. 57 zuführbar, in welchen ein Energiemaß $s_{energy}$ bzw. ein Geschwindigkeitsmaß $s_{diff}$ ermittelbar ist. Aus dem Energiemaß $s_{energy}$ und dem Geschwindigkeitsmaß $s_{diff}$ ist ein Maß Q für die Relativgeschwindigkeit ermittelbar, woraus ein Schätzwert $P_v$ für die Relativge-schwindigkeit zwischen Sender 1 und Empfänger 2 bestimmbar ist.

In einer vorteilhaften Ausgestaltungsform der Erfindung ist $\xi = \mu$ gewählt und das Ausgangssignal des Sub-trahierers $24\,\overline{S}_{motion}$ neben der Vorhersageeinrichtung 30 auch der Relativgeschwindigkeits-Schätzeinheit 50 bzw. der Einheit zur Bildung von Betragsquadraten 54 zuführbar, so dass auf den Subtrahierer 52 verzichtet werden kann. Dies führt zu einer aufwandsgünstigeren Vorrichtung, mit der neben der bewegungskompensierten Rauschschätzung auch eine Schätzung der Relativgeschwindigkeit zwischen Sender und Empfänger durchführbar ist.

In einer bevorzugten Ausführungsform der Erfindung sind die verschiedenen Einheiten, Einrichtungen, Subtrahierer und Summierer sowie Speichervorrichtungen alle oder in Teilen in eine oder mehrere Mikroprozessoreinheiten integriert.

Weiterhin sieht eine Ausgestaltungsvariante der Erfindung vor, dass der zeitliche Abstand T, in welchem Referenzsymbole 14, 16 gesendet werden und/oder die Gestalt der Referenzsymbole in der erfindungsgemäßen Vorrichtung hinterlegbar sind.

Bezugszeichenliste

| 1 | Sender |
|---|---|
| 2 | Empfänger |
| 3 | Hindernis |
| 5 | Übertragungskanal |
| 10 | Datensignal |
| 11 | OFDM-Datensignal |
| 12 | Informationssymbol |
| 14 | gespeichertes Referenzsymbol |
| 16 | neues Referenzsymbol |
| 18 | neues OFDM-Symbol |
| 20a | Speichervorrichtung |
| 20b | Speichervorrichtung |
| 20c | Speichervorrichtung |
| 20d | Speichervorrichtung |
| 20e | Speichervorrichtung |
| 20f | Speichervorrichtung |
| 20L | Speichervorrichtung |
| 22 | Einrichtung zur Berechnung des statistischen Moments |

| 24 | Subtrahierer |
|---|---|
| 26 | Subtrahierer |
| 27 | Mittelungseinheit |
| 28 | Einheit zur Bildung von Betragsquadraten |
| 30 | Vorhersageeinrichtung |
| 32 | Einheit zur Anpassung von c0 |
| 33 | Einheit zur Anpassung von c1 |
| 35 | Einheit zur Mittelung von c0-Anpassungschritten |
| 36 | Einheit zur Mittelung von c1-Anpassungschritten |
| 50 | Relativgeschwindigkeitschätzeinheit |
| 52 | Subtrahierer |
| 53 | Einheit zur Bildung von Betragsquadraten |
| 54 | Einheit zur Bildung von Betragsquadraten |
| 56 | Summierer |
| 57 | Summierer |
| $\bar{S}_{-1}$ | empfangenes Referenzsymbol |
| $\bar{S}_{-2}$ | empfangenes Referenzsymbol |
| $\bar{S}_{-3}$ | empfangenes Referenzsymbol |
| $\bar{S}_{-4}$ | empfangenes Referenzsymbol |
| $\bar{S}_{-5}$ | empfangenes Referenzsymbol |
| $\bar{S}_{-\mu}$ | empfangenes Referenzsymbol |
| $\bar{S}_{-\xi}$ | empfangenes Referenzsymbol |
| $\bar{S}_{avg}$ | statischer Anteil der empfangenen Referenzsymbole |
| $\bar{S}_{motion}$ | dynamischer Anteil der empfangenen Referenzsymbole |
| $\bar{S}_{err}$ | Vorhersagefehler |
| $\bar{S}_{pred}$ | Vorhersagewert |
| $\bar{S}_{energy}$ | Energiemaß |
| $\bar{S}_{diff}$ | Geschwindigkeitsmaß |
| T | zeitlicher Abstand der Referenzsymbole |
| k | Laufindex |
| $f_0$ | Trägerfrequenz |
| $f_1$ | Trägerfrequenz |
| $f_2$ | Trägerfrequenz |
| $f_3$ | Trägerfrequenz |
| $f_4$ | Trägerfrequenz |
| $f_5$ | Trägerfrequenz |
| $f_6$ | Trägerfrequenz |
| f | Frequenzachse |
| $P_{noise}$ | Schätzwert Rauschen |

(fortgesetzt)

| $P_v$ | Schätzwert Relativgeschwindigkeit zwischen Sender und Empfänger |
|---|---|
| $f_{dmax2}$ | maximale Dopplerfrequenz im empfangenen Datensignal |
| $f_{dmax1}$ | maximale Dopplerfrequenz im empfangenen Datensignal |
| $f_g$ | Grenzfrequenz |
| $Q$ | Maß für Relativgeschwindigkeit |
| $\bar{s}_0$ | neu empfangenes Referenzsymbol |

**Patentansprüche**

1. Verfahren zur bewegungskompensierten Rauschschätzung bei mobilen drahtlosen Übertragungssystemen, bei welchen von einem Sender (1) Referenzsymbole (14, 16) ausgesandt werden mit fol-genden Schritten:

   - dass aus wenigstens einem Teil zeitlich mittel- oder unmittelbar aufeinanderfolgend in einem Empfänger (2) empfangener Referenzsymbole ($\bar{s}_{-1}$, $\bar{s}_{-2}$, $\bar{s}_{-3}$) durch Bildung eines statistischen Moments ein statischer Anteil ($\bar{s}_{avg}$) der empfangenen Referenzsymbole ($\bar{s}_{-1}$, $\bar{s}_{-2}$, $\bar{s}_{-3}$) ermittelt wird;
   - dass ein dynamischer Anteil ($\bar{s}_{motion}$) der empfangenen Referenzsymbole ($\bar{s}_{-1}$, $\bar{s}_{-2}$, $\bar{s}_{-3}$) durch Vergleich mindestens zweier mittel- oder unmittelbar zeitlich aufeinanderfolgender Referenzsymbole ($\bar{s}_{-\mu}$, $\bar{s}_{-1}$) ermittelt wird;
   - dass aus dem statischen ($\bar{s}_{avg}$) und dem dynamischen Anteil ($\bar{s}_{motion}$) der empfangenen Referenzsymbole ($\bar{s}_{-1}$, $\bar{s}_{-2}$, $\bar{s}_{-3}$) ein Vorhersagewert ($\bar{s}_{pred}$) für das nächste empfangene Referenzsymbol ($\bar{s}_0$) berechnet wird;
   - dass nach Empfang des nächsten Referenzsymbols (so) durch Vergleich dieses empfangenen Referenzsymbols ($\bar{s}_0$) mit dem Vorhersagewert ($\bar{s}_{pred}$) ein Vorhersagefehler ($\bar{s}_{err}$) bestimmt wird;
   - dass aus dem Vorhersagefehler ($\bar{s}_{err}$) ein Schätzwert für das Rauschen ($P_{noise}$) eines in einem Übertragungskanal (5). übertragenen Datensignals ermittelt wird;
   - dass unter Berücksichtigung des Vorhersagefehlers ($\bar{s}_{err}$) die Berechnung des Vorhersagewertes ($\bar{s}_{pred}$) an zeitliche Veränderungen des Übertragungskanals angepasst wird.

2. Verfahren nach Anspruch 1,
   **dadurch gekennzeichnet, dass** für die Auswertung der Referenzsymbole ($\bar{s}_{-1}$, $\bar{s}_{-2}$, $\bar{s}_{-3}$) ein im Empfänger (2) bekannter zeitlicher Abstand (T), in welchem die Referenzsymbole ($\bar{s}_{-1}$, $\bar{s}_{-2}$, $\bar{s}_{-3}$) ausgesandt werden, und/oder eine im Empfänger (2) bekannte Gestalt der Referenzsymbole ($\bar{s}_{-1}$, $\bar{s}_{-2}$, $\bar{s}_{-3}$) herangezogen werden.

3. Verfahren nach einem der Ansprüche 1 bis 2,
   **dadurch gekennzeichnet, dass** die Referenzsymbole ($\bar{s}_{-1}$, $\bar{s}_{-2}$, $\bar{s}_{-3}$) in gleichen Zeitabständen (T) ausgesandt werden.

4. Verfahren nach einem der Ansprüche 1 bis 3,
   **dadurch gekennzeichnet, dass** zur Berechnung des Vorhersagewertes ($\bar{s}_{pred}$) eine Linearkombination aus dem statischen ($\bar{s}_{avg}$) und dem dynamischen Anteil ($\bar{s}_{motion}$) der Referenzsymbole ($\bar{s}_{-1}$, $\bar{s}_{-2}$, $\bar{s}_{-3}$) verwendet wird.

5. Verfahren nach einem der Ansprüche 1 bis 4,
   **dadurch gekennzeichnet, dass** die Berechnung des Vorhersagewertes ($\bar{s}_{pred}$) unter Verwendung der Methode der kleinsten Fehlerquadrate an zeitliche Veränderungen des Übertragungskanals (5) angepasst wird.

6. Verfahren nach einem der Ansprüche 1 bis 5,
   **dadurch gekennzeichnet, dass** die Berechnung des Vorhersagewertes ($\bar{s}_{pred}$) jeweils nach der Ermittlung eines weiteren Vorhersagefehlers ($\bar{s}_{pred}$) angepasst wird.

7. Verfahren nach einem der Ansprüche 1 bis 5,
   **dadurch gekennzeichnet, dass** die Anpassung der Berechnung des Vorhersagewertes ($\bar{s}_{pred}$) stets nach bestimmten Zeitintervallen erfolgt, wobei wenigstens ein Teil der im jeweiligen Zeitintervall ermittelten Vorhersagefehler ($\bar{s}_{pred}$) berücksichtigt wird.

**8.** Verfahren nach Anspruch 7,
**dadurch gekennzeichnet, dass** die Anpassung der Berechnung des Vorhersagewertes ($\bar{s}_{Pred}$) durch Mittelung der jeweils aus der Berücksichtigung der einzelnen Vorhersagefehler ($\bar{s}_{err}$) resultierenden Anpassungen erfolgt.

**9.** Verfahren nach einem der Ansprüche 1 bis 8,
**dadurch gekennzeichnet, dass** der Wert mindestens eines bei der Berechnung des Vorhersagewertes ($\bar{s}_{pred}$) eingesetzten Parameters (c1) als Indikator für die zeitliche Varianz des Übertragungskanals (5) verwendet wird.

**10.** Verfahren nach einem der Ansprüche 1 bis 9,
**dadurch gekennzeichnet, dass** durch Summation der Betragsquadrate der Differenzen von K zeitlich jeweils gleich beabstandeten Referenzsymbolen ($\bar{s}_{-1}, \bar{s}_{-\xi}$) und deren Normierung ein Maß Q für die zeitliche Änderung des Übertragungskanals (5) ermittelt wird, welchem ein Schätzwert $P_v$ für die Relativgeschwindigkeit des Empfängers (2) zum Sender (1) zugeordnet wird, wobei Q insbesondere gemäß der Relation

$$Q = \frac{\sum_{h=1}^{K} \left| \bar{s}_{-1h} - \bar{s}_{-\xi h} \right|^2}{\sum_{h=1}^{K} \left| \bar{s}_{-1h} \right|^2}$$

ermittelt wird.

**11.** Verfahren nach Anspruch 9 und 10,
**dadurch gekennzeichnet, dass** das Maß Q nur ermittelt wird, wenn anhand wenigstens eines bei der Berechnung des Vorhersagewertes ($\bar{s}_{pred}$) verwendeten Parameters (c1) eine zeiliche Varianz des Übertragungskanals (5) festgestellt wird.

**12.** Vorrichtung zur bewegungskompensierten Rauschschätzung bei mobilen drahtlosen Übertragungssystemen, bei welchen von einem Sender Referenzsymbole ausgesandt werden, dieVorrichtung aufweisend

- Speichervorrichtungen (20a, 20b, 20c) für aus einem Empfänger (2) zugeführte, zeitlich mittel- oder unmittelbar aufeinander folgend ausgesandte Referenzsymbole ($\bar{s}_{-1}, \bar{s}_{-2}, \bar{s}_{-3}$) ;
- Mittel (22) zur Berechnung eines statischen Anteils ($\bar{s}_{avg}$) der empfangenen Referenzsymbole ($\bar{s}_{-1}, \bar{s}_{-2}, \bar{s}_{-3}$) durch Bildung eines statistischen Moments aus wenigstens einem Teil der in den Speichervorrichtungen (20a, 20b, 20c) gespeicherten Referenzsymbole ($\bar{s}_{-1}, \bar{s}_{-2}, \bar{s}_{-3}$) ;
- Mittel (24) zur Ermittlung eines dynamischen Anteils ($\bar{s}_{motion}$) der empfangenen Referenzsymbole ($\bar{s}_{-1}, \bar{s}_{-2}, \bar{s}_{-3}$) aus der Differenz wenigstens zweier in den Speichervorrichtungen (20a, 20d) gespeicherter Referenzsymbole ($\bar{s}_{-1}, \bar{s}_{-\mu}$);
- eine Vorhersageeinrichtung (30) zur Ermittlung eines Vorhersagewertes ($\bar{s}_{pred}$) für das nächste vom Empfänger zugeführte Referenzsymbol ($\bar{s}_0$) mit Hilfe des statischen Anteils ($\bar{s}_{avg}$) und des dynamischen Anteils ($\bar{s}_{motion}$) der Referenzsymbole ($\bar{s}_{-1}, \bar{s}_{-2}, \bar{s}_{-3}$) ;
- Mittel (26) zur Bestimmung eines Vorhersagefehlers ($\bar{s}_{err}$) aus der Differenz zwischen dem vorhergesagten Referenzsymbol ($\bar{s}_{pred}$) und dem nächsten vom Empfänger (2) zugeführten Referenzsymbol ($\bar{s}_0$);
- Mittel (27, 28) zur Berechnung eines Schätzwertes ($P_{noise}$) für das Rauschen eines in einem Übertragungskanal (5) übertragenen Datensignals aus dem Vorhersagefehler ($\bar{s}_{err}$);
- Mittel (32, 33) zur Anpassung der Vorhersageeinrichtung (30) anhand des Vorhersagefehlers ($\bar{s}_{err}$) an zeitliche Veränderungen des Übertragungskanals.

**13.** Vorrichtung nach Anspruch 12,
**dadurch gekennzeichnet, dass** der zeitliche Abstand (T), in dem Referenzsymbole (14, 16) gesendet werden und/oder die Gestalt der Referenzsymbole (14, 16) in der Vorrichtung oder im Empfänger hinterlegbar ist.

**14.** Vorrichtung nach einem der Ansprüche 12 bis 13,
**dadurch gekennzeichnet, dass** in der Vorhersageeinrichtung (30) zur Vorhersage des nächsten vom Empfänger (2) zugeführten Referenzsymbols (so) die Bildung einer Linearkombination aus dem statischen ($\bar{s}_{avg}$) und dem dynamischen Anteil ($\bar{s}_{motion}$) der Referenzsymbole ($\bar{s}_{-1}$, $\bar{s}_{-2}$, $\bar{s}_{-3}$) vorgesehen ist.

**15.** Vorrichtung nach einem der Ansprüche 12 bis 14,
**dadurch gekennzeichnet, dass** Einheiten (35, 36) zur Ermittelung von Anpassungsschritten vorgesehen sind.

**16.** Vorrichtung nach einem der Ansprüche 12 bis 15,
**dadurch gekennzeichnet, dass** die Speichervorrichtungen (20a, 20b, 20c) für Referenzsymbole ($\bar{s}_{-1}$, $\bar{s}_{-2}$, $\bar{s}_{-3}$) als First-In-First-Out-Speicher ausgeführt sind.

**17.** Vorrichtung nach einem der Ansprüche 12 bis 16,
**dadurch gekennzeichnet, dass** Mittel (50) vorgesehen sind, mit denen anhand von in den Speichervorrichtungen (20a, 20b, 20c) für Referenzsymbole ($\bar{s}_{-1}$, $\bar{s}_{-2}$, $\bar{S}_{-3}$) gespeicherten Referenzsymbolen ($\bar{s}_{-\xi}$, $\bar{s}_{-1}$) die Relativgeschwindigkeit ($P_v$) zwischen Sender (1) und Empfänger (2) schätzbar ist.

**18.** Vorrichtung nach Anspruch 17,
**dadurch gekennzeichnet, dass** die Mittel (50) zur Ermittlung eines Schätzwertes ($P_v$) für die Relativgeschwindigkeit zwischen Sender (1) und Empfänger (2) mindestens zwei Summierer (56, 57) aufweisen.

**Claims**

**1.** A method for the motion-compensated noise estimation in a mobile wireless transmission system in which reference symbols (14, 16) are sent out by a transmitter (1), comprising the following steps:

- through the formation of a statistical moment, a static portion ($\bar{S}_{avg}$) of received reference symbols ($\bar{S}_{-1}$, $\bar{S}_{-2}$, $\bar{S}_{-3}$) is determined from at least part of the reference symbols ($\bar{S}_{-1}$, $\bar{S}_{-2}$, $\bar{S}_{-3}$) which have been received by a receiver (2) and follow one another indirectly or directly in time;
- a dynamic portion ($\bar{S}_{motion}$) of the received reference symbols ($\bar{S}_{-1}$, $\bar{S}_{-2}$, $\bar{S}_{-3}$) is determined by comparing at least two reference symbols ($\bar{S}_{-\mu}$, $\bar{S}_{-1}$) following one another indirectly or directly in time;
- a predictive value ($\bar{S}_{pred}$) for the next reference symbol (so) received is calculated from the static ($\bar{S}_{avg}$) and dynamic portions ($\bar{S}_{motion}$) of the received reference symbols ($\bar{S}_{-1}$, $\bar{S}_{-2}$, $\bar{S}_{-3}$);
- a prediction error ($\bar{S}_{err}$) is determined upon receipt of the next reference symbol (so) by comparing this received reference symbol (so) with the predictive value ($\bar{S}_{pred}$);
- an estimated value for the noise ($P_{noise}$) of a data signal transmitted in a transmission channel (5) is determined from the prediction error ($\bar{S}_{err}$);
- the calculation of the predictive value ($\bar{S}_{pred}$) is adapted to temporal changes in the transmission channel in consideration of the prediction error ($\bar{S}_{err}$).

**2.** The method according to claim 1,
**characterized in that** a temporal distance (T) which is known in the receiver (2) and in which the reference symbols ($\bar{S}_{-1}$, $\bar{S}_{-2}$, $\bar{S}_{-3}$) are sent out and/or a form of the reference symbols ($\bar{S}_{-1}$, $\bar{S}_{-2}$, $\bar{S}_{-3}$) which is known in the receiver are used for the evaluation of the reference symbols ($\bar{S}_{-1}$, $\bar{S}_{-2}$, $\bar{S}_{-3}$).

**3.** The method according to any one of claims 1 to 2,
**characterized in that** the reference symbols ($\bar{S}_{-1}$, $\bar{S}_{-2}$, $\bar{S}_{-3}$) are sent out at equal intervals (T).

**4.** The method according to any one of claims 1 to 3,
**characterized in that** a linear combination of the static ($\bar{S}_{avg}$) and the dynamic portions ($\bar{S}_{motion}$) of the reference symbols ($\bar{S}_{-1}$, $\bar{S}_{-2}$, $\bar{S}_{-3}$) is employed for the calculation of the predictive value ($\bar{S}_{pred}$).

**5.** The method according to any one of claims 1 to 4,
**characterized in that** the calculation of the predictive value ($\bar{S}_{pred}$) is adapted to temporal changes in the transmission channel (5) by use of the method of least error squares.

**6.** The method according to any one of claims 1 to 5,
**characterized in that** the calculation of the predictive value ($\bar{S}_{pred}$) is adapted in each case after the determination of a further prediction error ($\bar{S}_{err}$).

7. The method according to any one of claims 1 to 5,
**characterized in that** the adaptation of the calculation of the predictive value ($\overline{S}_{pred}$) is always performed after specific time intervals, at least part of the prediction errors ($\overline{S}_{err}$) which have been determined in the respective time interval being taken into consideration.

8. The method according to claim 7,
**characterized in that** the adaptation of the calculation of the predictive value ($\overline{S}_{pred}$) is performed by averaging the adaptations which result in each case from the consideration of the individual prediction errors ($\overline{S}_{err}$).

9. The method according to any one of claims 1 to 8,
**characterized in that** the value of at least one parameter (c1) employed for the calculation of the predictive value ($\overline{S}_{pred}$) is used as an indicator for the temporal variance of the transmission channel (5).

10. The method according to any one of claims 1 to 9,
**characterized in that** a quantity Q for the temporal variation of the transmission channel (5) is determined by summation of the squared absolute values of the differences of K reference symbols ($\overline{S}_{-1}, \overline{S}_{-\xi}$) with equal intervals therebetween and their standardization, an estimated value $P_v$ for the relative velocity between the receiver (2) and the transmitter (1) being associated to said quantity, and Q being determined in particular according to the relation:

$$Q = \frac{\sum_{h=1}^{K} \left| \overline{s}_{-1h} - \overline{s}_{-\xi h} \right|^2}{\sum_{h=1}^{K} \left| \overline{s}_{-1h} \right|^2}$$

11. The method according to claims 9 and 10,
**characterized in that** the quantity Q is only determined if a temporal variance of the transmission channel (5) is found on the basis of at least one parameter (c1) used in the calculation of the predictive value ($\overline{S}_{pred}$).

12. A device for the motion-compensated noise estimation in mobile wireless transmission systems, in which reference symbols are sent out by a transmitter, the device including

- storage devices (20a, 20b, 20c) for reference symbols ($\overline{S}_{-1}, \overline{S}_{-2}, \overline{S}_{-3}$) which are supplied by a receiver (2) and follow one another indirectly or directly in time;
- means (22) for calculating a static portion ($\overline{S}_{avg}$) of the received reference symbols ($\overline{S}_{-1}, \overline{S}_{-2}, \overline{S}_{-3}$) by the formation of a statistical moment from at least part of the reference symbols ($\overline{S}_{-1}, \overline{S}_{-2}, \overline{S}_{-3}$) which are stored in the storage devices (20a, 20b, 20c);
- means (24) for determining a dynamic portion ($\overline{S}_{motion}$) of the received reference symbols ($\overline{S}_{-1}, \overline{S}_{-2}, \overline{S}_{-3}$) from the difference of at least two reference symbols ($\overline{S}_{-1}, \overline{S}_{-\mu}$) which are stored in the storage devices (20a, 20d);
- a prediction device (30) for determining a predictive value ($\overline{S}_{pred}$) for the next reference symbol (so) supplied by the receiver with the aid of the static portion ($\overline{S}_{avg}$) and the dynamic portion ($\overline{S}_{motion}$) of the reference symbols ($\overline{S}_{-1}, \overline{S}_{-2}, \overline{S}_{-3}$) ;
- means (26) for determining a prediction error ($\overline{S}_{err}$) from the difference between the predicted reference symbol ($\overline{S}_{pred}$) and the next reference symbol (so) supplied by the receiver (2);
- means (27, 28) for calculating, from the prediction error ($\overline{S}_{err}$), an estimated value ($P_{noise}$) for the noise of a data signal transmitted in a transmission channel (5);
- means (32, 33) for adapting the prediction device (30) to temporal changes in the transmission channel on the basis of the prediction error ($\overline{S}_{err}$).

13. The device according to claim 12,
**characterized in that** the temporal distance (T) during which reference symbols (14, 16) are sent and/or the form of the reference symbols (14, 16) can be deposited in the device or in the receiver.

14. The device according to claim 12 or 13,
**characterized in that** the formation of a linear combination of the static ($\overline{S}_{avg}$) and the dynamic portions ($\overline{S}_{motion}$) of the reference symbols ($\overline{S}_{-1}, \overline{S}_{-2}, \overline{S}_{-3}$) is provided in the prediction device (30) for predicting the next reference symbol (so) supplied by the receiver (2).

**15.** The device according to any one of claims 12 to 14,
**characterized in that** units (35, 36) are provided for the determination of adaptation steps.

**16.** The device according to any one of claims 12 to 15,
**characterized in that** the storage devices (20a, 20b, 20c) for reference symbols ($\overline{S}_{-1}, \overline{S}_{-2}, \overline{S}_{-3}$) are configured as First-In-First-Out memories.

**17.** The device according to any one of claims 12 to 16,
**characterized in that** means (50) are provided which serve for estimating the relative velocity ($P_v$) between transmitter (1) and receiver (2) on the basis of reference symbols ($\overline{S}_{-\xi}, \overline{S}_{-1}$) stored in the storage devices (20a, 20b, 20c) for reference symbols ($\overline{S}_{-1}, \overline{S}_{-2}, \overline{S}_{-3}$).

**18.** The device according to claim 17,
**characterized in that** the means (50) for determining an estimated value ($P_v$) for the relative velocity between transmitter (1) and receiver (2) comprise at least two summing units (56, 57).

**Revendications**

**1.** Procédé d'estimation de bruit avec compensation de mouvement dans des systèmes de transmission mobiles sans fil dans lesquels des symboles de référence (14, 16) sont émis par un émetteur (1), comportant les étapes suivantes :

- à partir d'au moins une partie de symboles de référence ($\overline{S}_{-1}, S_{-2}, Z_{-3}$) reçus dans un récepteur (2) en succession directe ou indirecte dans le temps, une fraction statique ($\overline{S}_{avg}$) des symboles de référence ($\overline{S}_{-1}, S_{-2}, S_{-3}$) reçus est déterminée par formation d'un moment statistique ;
- une fraction dynamique ($\overline{S}_{motion}$) des symboles de référence ($\overline{S}_{-1}, \overline{S}_{-2}, S_{-3}$) reçus est déterminée par comparaison d'au moins deux symboles de référence ($\overline{S}_{-\mu}, S_{-1}$) se succédant directement ou indirectement dans le temps ;
- à partir de la fraction statique ($\overline{S}_{avg}$) et de la fraction dynamique ($\overline{S}_{motion}$) des symboles de référence ($\overline{S}_{-1}, \overline{S}_{-2}, \overline{S}_{-3}$) reçus, une valeur de prédiction ($\overline{S}_{pred}$) est calculée pour le prochain symbole de référence ($\overline{S}_0$) reçu ;
- après réception du prochain symbole de référence ($\overline{S}_0$), une erreur de prédiction ($\overline{S}_{err}$) est déterminée par comparaison de ce symbole de référence ($\overline{S}_0$) reçu avec la valeur de prédiction ($\overline{S}_{pred}$) ;
- à partir de l'erreur de prédiction ($\overline{S}_{err}$), une valeur estimative pour le bruit ($P_{noise}$) d'un signal de données transmis dans un canal de transmission (5) est déterminée ;
- compte tenu de l'erreur de prédiction ($\overline{S}_{err}$), le calcul de la valeur de prédiction ($\overline{S}_{pred}$) est adapté à des variations temporelles du canal de transmission.

**2.** Procédé selon la revendication 1,
**caractérisé en ce qu'**un écart de temps (T) connu dans le récepteur (2) et dans lequel les symboles de référence ($\overline{S}_{-1}, S_{-2}, S_{-3}$) sont émis et/ou une configuration des symboles de référence ($\overline{S}_{-1}, S_{-2}, S_{-3}$) connue dans le récepteur (2) est utilisé(e) pour l'évaluation des symboles de référence ($\overline{S}_{-1}, \overline{S}_{-2}, S_{-3}$).

**3.** Procédé selon l'une des revendications 1 à 2,
**caractérisé en ce que** les symboles de référence ($\overline{S}_{-1}, S_{-2}, S_{-3}$) sont émis dans des mêmes écarts de temps (T).

**4.** Procédé selon l'une des revendications 1 à 3,
**caractérisé en ce qu'**une combinaison linéaire résultant de la fraction statique ($\overline{S}_{avg}$) et de la fraction dynamique ($\overline{S}_{motion}$) des symboles de référence ($\overline{S}_{-1}, \overline{S}_{-2}, \overline{S}_{-3}$) est utilisée pour le calcul de la valeur de prédiction ($\overline{S}_{pred}$).

**5.** Procédé selon l'une des revendications 1 à 4,
**caractérisé en ce que** le calcul de la valeur de prédiction ($\overline{S}_{pred}$) est adapté à des variations temporelles du canal de transmission (5) moyennant la méthode des plus petits carrés d'erreurs.

**6.** Procédé selon l'une des revendications 1 à 5,
**caractérisé en ce que** le calcul de la valeur de prédiction ($\overline{S}_{pred}$) est chaque fois adapté après la détermination d'une autre erreur de prédiction ($\overline{S}_{err}$).

**7.** Procédé selon l'une des revendications 1 à 5,
**caractérisé en ce que** l'adaptation du calcul de la valeur de prédiction ($\overline{S}_{pred}$) est toujours effectuée après des intervalles de temps déterminés, au moins une partie des erreurs de prédiction ($\overline{S}_{err}$) déterminées dans l'intervalle de temps respectif étant prise en compte.

**8.** Procédé selon la revendication 7,
**caractérisé en ce que** l'adaptation du calcul de la valeur de prédiction ($\overline{S}_{pred}$) est effectuée par établissement de la moyenne des adaptations résultant respectivement de la prise en compte des différentes erreurs de prédiction ($\overline{S}_{err}$).

**9.** Procédé selon l'une des revendications 1 à 8,
**caractérisé en ce que** la valeur d'au moins un paramètre (c1) employé lors du calcul de la valeur de prédiction ($\overline{S}_{pred}$) est utilisé comme indicateur pour la variance temporelle du canal de transmission (5).

**10.** Procédé selon l'une des revendications 1 à 9,
**caractérisé en ce qu'**une cote Q pour la variation temporelle du canal de transmission (5), à laquelle une valeur estimative $P_v$ pour la vitesse relative du récepteur (2) par rapport à l'émetteur (1) est assignée, est déterminée par addition des carrés des différences de K symboles de référence ($\overline{S}_{-1}, S_{-\xi}$) étant respectivement espacés par un même intervalle de temps et de leur normalisation, Q étant en particulier déterminée selon la relation

$$Q = \frac{\sum_{h=1}^{K} \left| \overline{S}_{-1h} - \overline{S}_{-\xi h} \right|^2}{\sum_{h=1}^{K} \left| \overline{S}_{-1h} \right|^2}$$

**11.** Procédé selon les revendications 9 et 10,
**caractérisé en ce que** la cote Q n'est déterminée que si une variance temporelle du canal de transmission (5) est constatée à l'aide d'au moins un paramètre (c1) employé lors du calcul de la valeur de prédiction ($\overline{S}_{pred}$).

**12.** Dispositif d'estimation de bruit avec compensation de mouvement dans des systèmes de transmission mobiles sans fil dans lesquels des symboles de référence sont émis par un émetteur, le dispositif présentent :

- des dispositifs de mémoire (20a, 20b, 20c) pour des symboles de référence ($\overline{S}_{-1}, S_{-2}, S_{-3}$) acheminés à partir d'un récepteur (2) en succession directe ou indirecte dans le temps ;
- des moyens (22) de calculer une fraction statique ($\overline{S}_{avg}$) des symboles de référence ($S_{-1}, S_{-2}, S_{-3}$) reçus par formation d'un moment statistique à partir d'au moins une partie des symboles de référence ($\overline{S}_{-1}, S_{-2}, S_{-3}$) mis en mémoire dans les dispositifs de mémoire (20a, 20b, 20c) ;
- des moyens (24) de déterminer une fraction dynamique ($\overline{S}_{motion}$) des symboles de référence ($\overline{S}_{-1}, S_{-2}, S_{-3}$) reçus à partir de la différence d'au moins deux symboles de référence ($\overline{S}_{-1}, S_{-\mu}$) mis en mémoire dans les dispositifs de mémoire (20a, 20d) ;
- un dispositif de prédiction (30) permettant de déterminer une valeur de prédiction ($\overline{S}_{pred}$) pour le prochain symbole de référence ($\overline{S}_0$) acheminé par le récepteur à l'aide de la fraction statique ($\overline{S}_{avg}$) et de la fraction dynamique ($\overline{S}_{motion}$) des symboles de référence ($\overline{S}_{-1}, S_{-2}, S_{-3}$) ;
- des moyens (26) de déterminer une erreur de prédiction ($\overline{S}_{err}$) à partir de la différence entre le symbole de référence prédit ($\overline{S}_{pred}$) et le prochain symbole de référence ($\overline{S}_0$) acheminé par le récepteur (2) ;
- des moyens (27, 28) de calculer une valeur estimative ($P_{noise}$) pour le bruit d'un signal de données transmis dans un canal de transmission (5) à partir de l'erreur de prédiction ($\overline{S}_{err}$) ;
- des moyens (32, 33) d'adapter le dispositif de prédiction (30) à des variations temporelles du canal de transmission à l'aide de l'erreur de prédiction ($\overline{S}_{err}$).

**13.** Dispositif selon la revendication 12,
**caractérisé en ce que** l'intervalle de temps (T) dans lequel des symboles de référence (14, 16) sont envoyés et/ou la configuration des symboles de référence (14, 16) peut être mémorisé(e) dans le dispositif ou dans le récepteur.

**14.** Dispositif selon l'une des revendications 12 à 13,

**caractérisé en ce que** la formation d'une combinaison linéaire résultant de la fraction statique ($\overline{S}_{avg}$) et de la fraction dynamique ($\overline{S}_{motion}$) des symboles de référence ($\overline{S}_{-1}, S_{-2}, S_{-3}$) est prévue dans le dispositif de prédiction (30) en vue de la prédiction du prochain symbole de référence ($\overline{S}_0$) acheminé par le récepteur (2).

15. Dispositif selon l'une des revendications 12 à 14,
   **caractérisé en ce que** des unités (35, 36) destinées à déterminer des étapes d'adaptation sont prévues.

16. Dispositif selon l'une des revendications 12 à 15,
   **caractérisé en ce que** les dispositifs de mémoire (20a, 20b, 20c) pour symboles de référence ($\overline{S}_{-1}, S_{-2}, S_{-3}$) sont réalisés comme mémoires FIFO (premier entré, premier sorti).

17. Dispositif selon l'une des revendications 12 à 16,
   **caractérisé en ce que** des moyens (50) sont prévus avec lesquels la vitesse relative ($P_v$) entre l'émetteur (1) et le récepteur (2) peut être estimée moyennant des symboles de référence ($\overline{S}_{-\xi}, S_{-1}$) mis en mémoire dans les dispositifs de mémoire (20a, 20b, 20c) pour symboles de référence ($\overline{S}_{-1}, S_{-2}, S_{-3}$).

18. Dispositif selon la revendication 17,
   **caractérisé en ce que** les moyens (50) de déterminer une valeur estimative ($P_v$) pour la vitesse relative entre l'émetteur (1) et le récepteur (2) présentent au moins deux additionneurs (56, 57).

Fig. 1
(Stand der Technik)

Fig. 2
(Stand der Technik)

Fig. 3

$c0$

$\approx 1$

$0$

$0$

$f_{dmax1}$

time-varying behavior

$c1$

$\approx \dfrac{\frac{\mu-1}{2}+1}{\mu-1}$

$0$

$0$

$r_0$

(depends on present noise)

$f_{dmax1}$

time-varying behavior

Fig. 4

**IN DER BESCHREIBUNG AUFGEFÜHRTE DOKUMENTE**

**In der Beschreibung aufgeführte Patentdokumente**

- DE 19923690 A1
- US 6636574 B2

- WO 02100033 A